# EUROPEAN PATENT SPECIFICATION

(11) **EP 1 431 132 B1**
(45) Date of publication and mention of the grant of the patent: **16.08.2006**
(21) Application number: 03027763.6
(22) Date of filing: 03.12.2003
(51) Int. Cl.: B60R 21/16

(54) **Occupant's leg protection system**
Insassenbeinschutzvorrichtung
Dispositif de protection de jambe de passager

(30) Priority: 16.12.2002 JP 2002364011; 16.12.2002 JP 2002364012
(43) Date of publication of application: 23.06.2004
(73) Proprietor: TAKATA CORPORATION, Minato-ku, Tokyo 106-8510 (JP)
(72) Inventor: Yoshikawa, Hiromichi, Minato-ku, Tokyo 106-8510 (JP); Abe, Kazuhiro, Minato-ku, Tokyo 106-8510 (JP)
(74) Representative: Banzer, Hans-Jörg

(56) References cited:
- WO-A-02/04262
- US-A1- 2001 017 454
- US-B1- 6 217 059
- PATENT ABSTRACTS OF JAPAN vol. 1999, no. 03, 31 March 1999 (1999-03-31) & JP 10 315894 A (HONDA MOTOR CO LTD), 2 December 1998 (1998-12-02)

## Description

The present invention relates to an occupant's leg protection system for preventing the legs of an occupant from hitting against an instrument panel and so on in the event of a frontal crash of a vehicle such as a car, and more specifically, it relates to an occupant's leg protection system equipped with an airbag that deploys forward of the legs of an occupant in a seat.

In WO 02/04262 A1 airbag devices for the protection of the legs of a vehicle occupant are described. In particular, airbag devices are shown in which an airbag deploys downwardly from an instrument panel and then along the lower surface of the instrument panel towards the knees of the vehicle occupant.

US 2001/0017454 A1 describes an airbag which deploys forward of the ankles or the insteps of a vehicle occupant's legs.

Japanese Unexamined Patent Application Publication No. 10-315894 describes an occupant's leg protection system equipped with an airbag that deploys forward of the legs of an occupant in a car seat in which the airbag inflates forward of the knees and then deploys downward along the shins, in particular the airbag deploys along the shins toward the insteps.

Car occupants are generally seated in a seat with the legs lower than the knees toeing out. Therefore, when the airbag deploys downward from the knees to the shins, as in the Japanese Unexamined Patent Application Publication No. 10-315894, the direction of the deployment of the airbag includes the direction of the forward movement of the legs.

According to the Japanese Unexamined Patent Application Publication No. 10-315894, the ankles or the insteps may probably move forward to hit against a dash panel and so on before the airbag reaches the ankles or the insteps.

It is an object of the present invention to provide an occupant's leg protection system capable of restraining the ankles or the insteps early.

Furthermore, it is an object of the present invention to provide an occupant's leg protection system in which the direction of the deployment of an airbag includes the direction opposite to the direction of the forward movement of the legs, thus having the excellent characteristic of preventing the legs from moving forward, and which is capable of restraining the ankles or the insteps early.

According to the present invention, these objects are achieved by an occupant's leg protection system as defined by claim 1. The dependent claims define preferred and advantageous embodiments of the invention.

The occupant's leg protection system according to the present invention includes an airbag that deploys forward of the legs of an occupant seated in a vehicle seat. Preferably the airbag first deploys forward of the ankles or the insteps of the occupant's legs and then deploys upward along the legs.

With such an occupant's leg protection system, if the airbag first deploys forward of the ankles or the insteps of the occupant's legs to prevent the forward movement thereof and then deploys upward along the legs, the ankles or the insteps are retrained early by the airbag, and thus the forward movement thereof is prevented.

Since the direction of the deployment of the airbag is opposite to the direction of the forward movement of the legs for the occupant seated in a normal position, a force of preventing the forward movement is applied to the legs from the deploying airbag. This decreases the amount of forward movement of the legs.

According to the invention, the airbag may first deploy forward of the ankles or the insteps and then deploy forward of the knees. This sufficiently prevents the forward movement of the knees, the thighs, and the lumbar part.

In the occupant's leg protection system according to the invention the airbag deploys substantially only forward of the ankles or the insteps and forward of the knees of the occupant's legs.

In the occupant's leg protection system, the airbag restrains the ankles or the insteps early, thus preventing the ankles or the insteps from hitting against a dash panel and so on. With the occupant's leg protection system, two parts of the occupant's legs, the lower end (the ankles or the insteps) and the upper end (the knees), are received by the airbag, so that the forward movement of the shins therebetween can be prevented even if it is not received directly by the airbag. Therefore, the forward movement of the occupant's legs can be prevented by merely inflating the airbag only in a total of two areas of the ankles or the insteps and the knees. Omitting the reception of the knees by the airbag allows the capacity of the entire airbag to be decreased; thus, the airbag can be inflated early even with a low-output inflator.

According to a further embodiment of the invention, the airbag includes an ankle bag that deploys only forward of the ankles or the insteps and a knee bag that is separated from the ankle bag and deploys only forward of the knees. With such an arrangement, the ankle bag and the knee bag can be arranged separately, which provides a high degree of flexibility in arranging the bags.

According to another embodiment of the invention, the airbag is shaped like a bag integrally including an ankle section that deploys only forward of the ankles or the insteps and a knee section that deploys only forward of the knees. With such an arrangement, since the airbag is made up of one bag, it is sufficient to provide one retainer for housing the airbag, thus facilitating the mounting of the occupant's leg protection system to a vehicle.

In the following, embodiments of the invention will be described with reference to the drawings.
Fig. 1 is a side view of the interior of a vehicle equipped with an occupant's leg protection system according to an embodiment of the present invention.
Fig. 2 is a schematic diagram of an airbag of Fig. 1.
Fig. 3 is a schematic diagram of an airbag of an occupant's leg protection system according to another embodiment.
Fig. 4 is a side view of the interior of a vehicle equipped with an occupant's leg protection system according to another embodiment.
Fig. 5 is a schematic diagram of an airbag of Fig. 4.
Fig. 6 is a schematic diagram of an airbag of an occupant's leg protection system according to yet another embodiment.
Fig. 7 is a longitudinal sectional view of an occupant's leg protection system according to an illustrative example.
Fig. 8 is a longitudinal sectional view of an occupant's leg protection system according to a further embodiment of the present invention.
Fig. 9 is a longitudinal sectional view of an occupant's leg protection system according to another embodiment of the present invention.
Fig. 10 is a longitudinal sectional view of an occupant's leg protection system according to another embodiment of the present invention.
Fig. 11 is a longitudinal sectional view of an occupant's leg protection system according to a further embodiment of the present invention.
Fig. 12 is a front view of an airbag of the occupant's leg protection system of Fig. 11.
Fig. 13 is a perspective view of the airbag of the occupant's leg protection system of Fig. 11.
Fig. 14 is a longitudinal sectional view of an occupant's leg protection system according to a further embodiment of the present invention.
Fig. 15 is a front view of an airbag used in an embodiment of the invention.

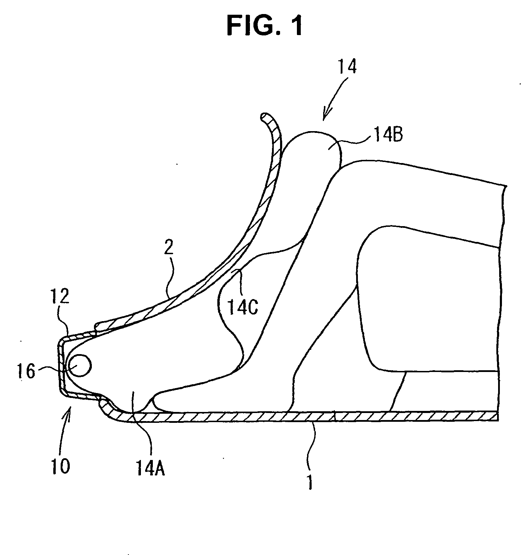

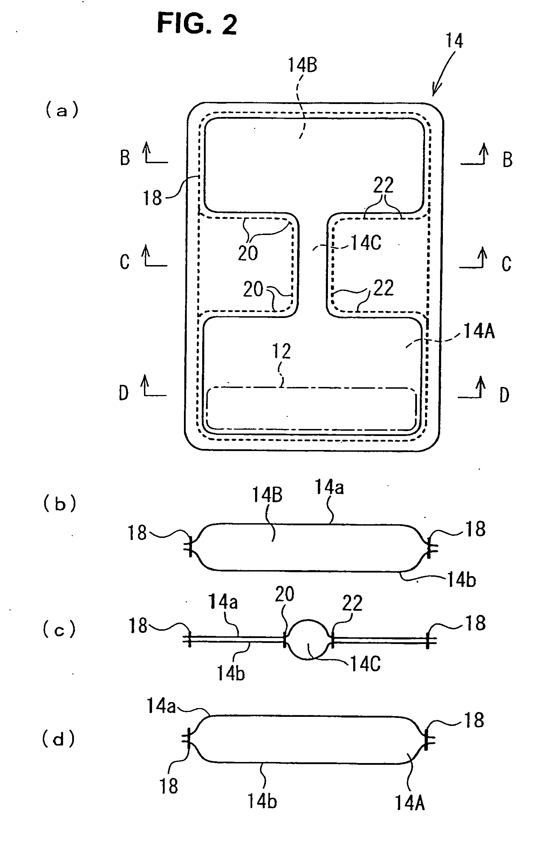

Fig. 1 is a side view of the vicinity of the front end of the interior of a vehicle equipped with an occupant's leg protection system according to an embodiment; Fig. 2(a) is a front view of an airbag of the occupant's leg protection system; and Figs. 2(b), 2(c), and 2(d) are sectional views thereof, taken along line B-B, C-C, and D-D of Fig. 2(a), respectively.

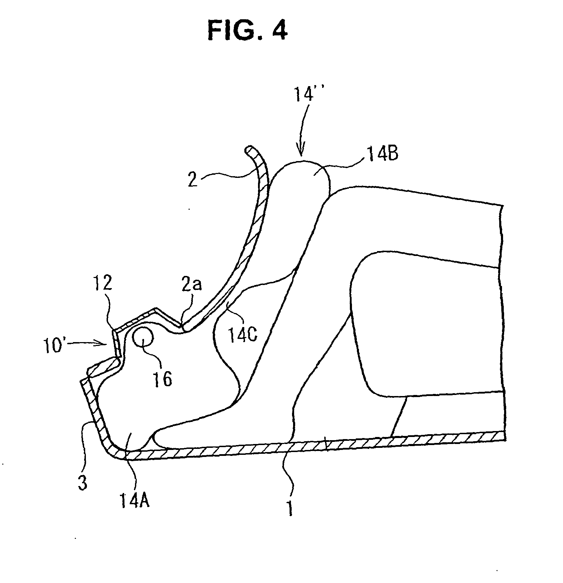

Referring to Fig. 1, an occupant's leg protection system 10 is mounted on a dash panel 3 (not shown in Fig. 1, refer to Fig. 4) connecting the front end of a floor panel 1 and the lower end of an instrument panel 2. The dash panel 3 stands substantially upward from the front end of the floor panel 1 so as to face the toes of occupant's legs. The instrument panel 2 curves in a convex shape toward the interior of the vehicle so as to face the vicinity of the toes to the knees of the occupant's legs.

The occupant's leg protection system 10 includes a casing 12 of which the front surface (surface adjacent to the occupant) is open, an airbag 14 housed in the casing 12 in a folded condition, and an inflator 16 for inflating the airbag 14. The front of the casing 12 is closed by a lid (not shown).

As shown in Figs. 1 and 2(a), the airbag 14 includes a lower chamber 14A that deploys forward of the toes to the ankles, an upper chamber 14B that deploys forward of the knees upper than that, and a duct 14C that communicates the lower chamber 14A and the upper chamber 14B with each other.

The inflator 16 according to the embodiment is column shaped and is arranged to pass through the lower chamber 14A along the width of the vehicle. The rear of the inflator 16 of the airbag 14 is joined to the casing 12 with a fastening (not shown). The position to mount the airbag 14 to the casing 12 is along the lower side of the lower chamber 14A.

The shape of the inflator 16 is not limited to the column and it may be shaped like a disk, etc.

In the embodiment, the airbag 14 is formed into a bag shape by superposing a substantially rectangular front panel 14a that forms the front surface of the airbag 14 and a rear panel 14b of substantially the same shape as the front panel 14a, which forms the rear surface, and joining the peripheries thereof together along a seam 18. The front panel 14a and the rear panel 14b are joined together along seams 20 and 22 that are recessed toward the center from the vertical middle of the left and right sides of the front panel 14a and the rear panel 14b, respectively, so that the airbag 14 is partitioned into the lower chamber 14A, the upper chamber 14B, and the duct 14C.

Each of the seams 20 and 22 has a substantially U-shape outline, one side extending vertically and the other two sides extending laterally in parallel to the upper side and the lower side of the front panel 14a and the rear panel 14b, the vertically extending sides are opposed in the vicinity of the lateral middle of the front panel 14a and the rear panel 14b. The space between the sides serves as the duct 14C. Both ends of each of the seams 20 and 22 join the seam 18.

The method of joining the front panel 14a to the rear panel 14b may include various methods such as bonding and welding in addition to the stitching.

When a vehicle including the occupant's leg protection system 10 with such an arrangement comes in a frontal crash, the inflator 16 is activated to emit gas into the airbag 14. The airbag 14 starts to inflate by the gas from the inflator 16 and push-opens the lid, thereby starting to inflate between the occupant's legs and the instrument panel 2.

With the airbag 14, the lower chamber 14A first deploys forward of the toes to the ankles of the occupant's legs by the gas from the inflator 16, thereby preventing the forward movement thereof. The gas in the lower chamber 14A then flows into the upper chamber 14B through the duct 14C to deploy the airbag 14 upward along the occupant's legs and to inflate the upper chamber 14B, thereby preventing the forward movement of the knees, the thighs, and the lumbar part.

Since the direction of the deployment of the airbag 14 is opposite to the direction of the forward movement of the legs for the occupant seated in a normal position, a force of preventing the forward movement is applied to the legs from the deployed airbag 14. This decreases the amount of forward movement of the legs.

In this embodiment, the vertical middle of the airbag 14 serves as the duct 14C. Therefore, the inner capacity of the airbag 14 is smaller than that of an airbag the whole of which is inflated, thus decreasing the output of the inflator 16.

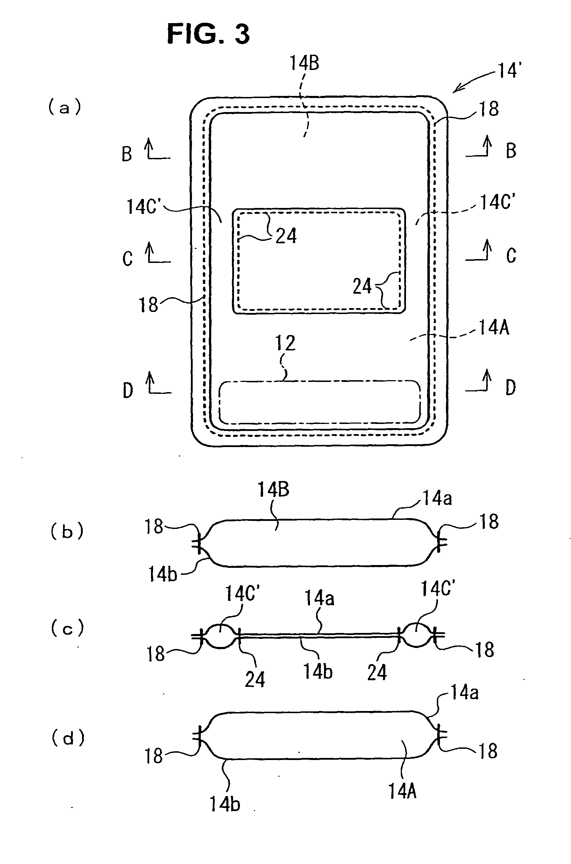

In the above embodiment, the lower chamber 14A and the upper chamber 14B of the airbag 14 communicate with each other through a single duct 14C. The lower chamber 14A and the upper chamber 14B, however, may communicate through more than two ducts. Referring to Fig. 2(a), the above embodiment has the duct 14C in the vicinity of the lateral middle of the airbag 14. Two ducts 14C' may be disposed along the left and right sides, through which the lower chamber 14A and the upper chamber 14B may communicate with each other, as in an airbag 14' shown in Fig. 3. Three or more ducts may be provided (not shown).

The interior of the airbag 14' of Fig. 3 is partitioned into the lower chamber 14A, the upper chamber 14B, and the two ducts 14C' by joining the front panel 14a to the rear panel 14b along a seam 24 formed in the vicinity of the center. The seam 24 has a substantially rectangular outline, of which one pair of sides extends vertically in parallel with the sides of the front panel 14a and the rear panel 14b and the other pair of sides extends laterally in parallel with the upper side and the lower side of the front panel 14a and the rear panel 14b. The vertically extending one pair of sides is apart from the seam 18 toward the center and the spaces between the pair of sides and the seam 18 serve as the ducts 14C'.

Other arrangements of the airbag 14' of Fig. 3 and the arrangement of an occupant's leg protection system equipped with the airbag 14' are the same as those of the occupant's leg protection system 10 of Figs. 1 and 2. Therefore, the same components of Fig. 3 as those of Figs. 1 and 2 are given the same reference numerals and a description thereof will be omitted.

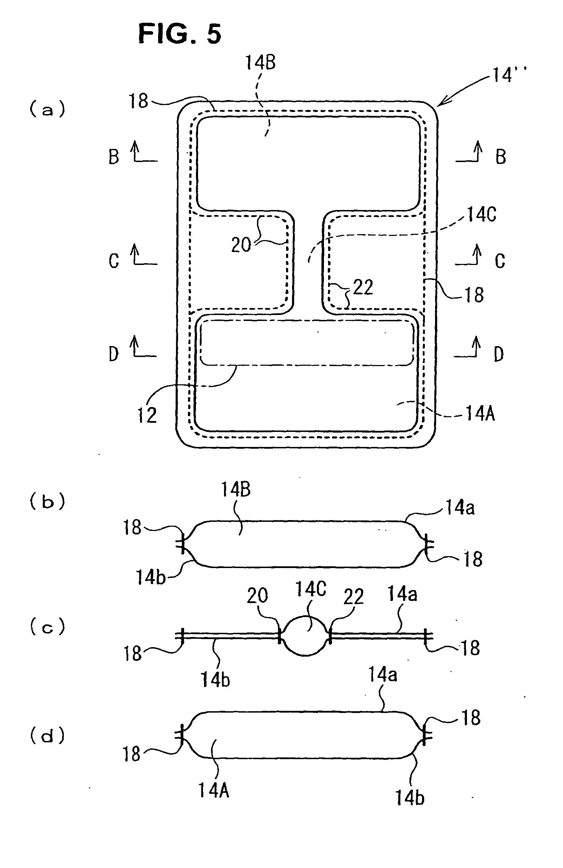

Fig. 4 is a side view of the vicinity of the front end of the interior of a vehicle equipped with an occupant's leg protection system according to another embodiment; Fig. 5(a) is a front view of an airbag of the occupant's leg protection system; and Figs. 5(b), 5(c), and 5(d) are sectional views thereof, taken along line B-B, C-C, and D-D of Fig. 5(a), respectively.

Referring to Fig. 4, the embodiment has an opening 2a for passing the airbag through at the lower part of the instrument panel 2 and in the vicinity of a height facing the ankles or the insteps of the occupant's legs. An occupant's leg protection system 10' is placed on the back of the instrument panel 2 so as to face the opening 2a. The occupant's leg protection system 10' also has the casing 12 whose front surface (adjacent to the occupant) is open, an airbag 14" housed in the casing 12 in a folded condition, and the inflator 16 for inflating the airbag 14", as in the occupant's leg protection system 10 of Fig. 1. The front open area of the casing 12 is arranged to face the opening 2a. The opening 2a is closed by a lid (not shown) mounted substantially flush with the instrument panel 2.

The airbag 14" also includes the lower chamber 14A that deploys forward of the ankles or the insteps of the occupant's legs, the upper chamber 14B that deploys forward of the knees upper than that, and the duct 14C that communicates the lower chamber 14A and the upper chamber 14B with each other, as in the airbag 14 of Figs. 1 and 2. The inflator 16 is arranged to pass through the lower chamber 14A along the width of the vehicle. The rear of the inflator 16 of the airbag 14" is joined to the casing 12 with a fastening (not shown). The position to mount the airbag 14" to the casing 12 is along the upper side of the lower chamber 14A.

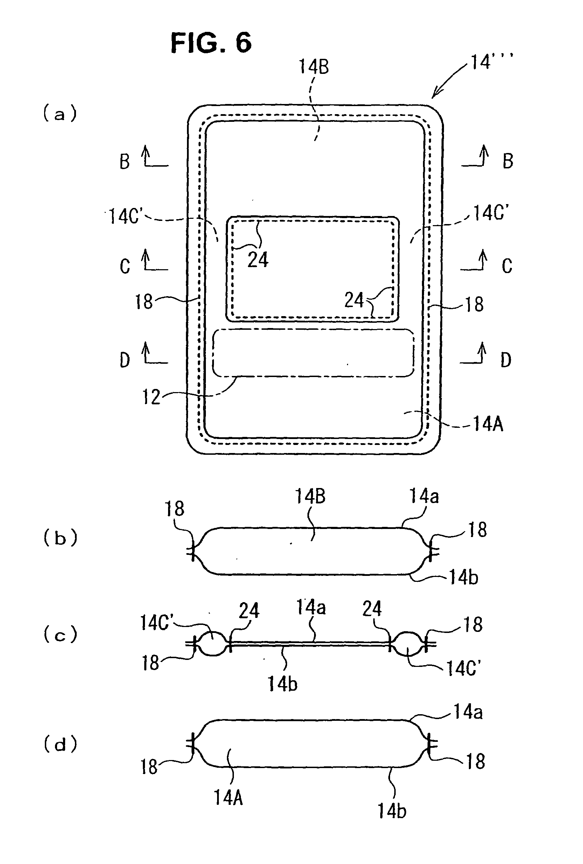

Other arrangements of the airbag 14" are the same as those of the airbag 14 of Figs. 1 and 2. Therefore, the same components of Figs. 5 and 6 as those of Figs. 1 and 2 are given the same reference numerals and a description thereof will be omitted.

Also with the occupant's leg protection system 10', the lower chamber 14A first inflates to deploy forward of the toes to the ankles of the occupant's legs by the gas from the inflator 16 and the airbag 14" then deploys upward, thereby inflating the upper chamber 14B.

Since the direction of the deployment of the airbag 14" is also opposite to the direction of the forward movement of the legs, a force of preventing the forward movement is applied to the legs from the deploying airbag 14". This decreases the amount of forward movement of the legs.

The embodiment having the occupant's leg protection system under the instrument panel, as shown in Figs. 4 and 5, may include two or more ducts, as in an airbag 14"' of Fig. 6.

The arrangement of the airbag 14"' of Fig. 6 is the same as that of the airbag 14' of Fig. 3, except that the rear surface (rear panel 14b) in the vicinity of the upper part of the lower chamber 14A is joined to the casing 12.

It is to be understood that the above-described embodiments are only examples of the present invention and the invention is not limited to the above embodiments. According to the above embodiments, while the airbag includes the upper chamber, the lower chamber, and the duct therein, the airbag may include only one chamber in all.

As described above, with the occupant's leg protection system according to the invention, the direction of the deployment of the airbag includes the direction opposite to the forward movement of the legs, thus having an excellent characteristic of preventing the forward movement of the legs and being capable of retraining the ankles or the insteps early.

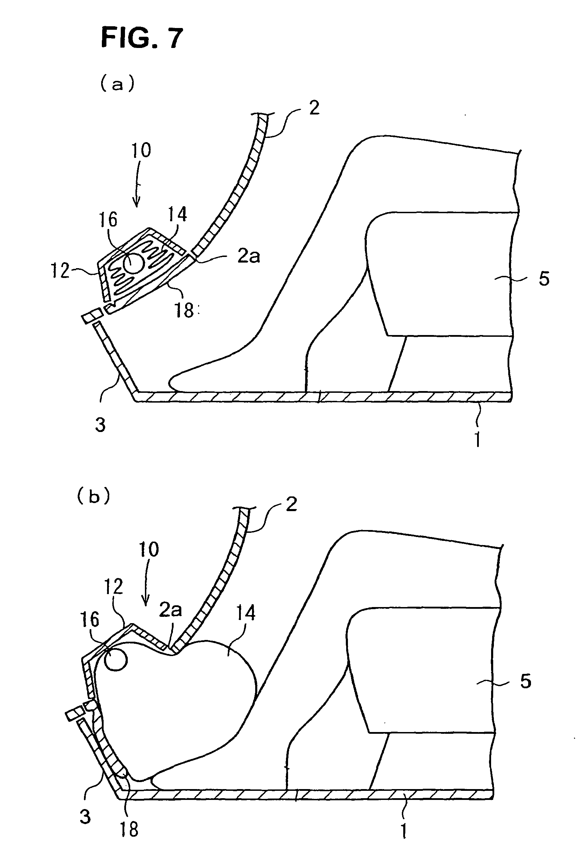

Fig. 7 is a longitudinal sectional view of an occupant's leg protection system according to an illustrative example, Fig. 7(a) showing a state before an airbag is inflated and Fig. 7(b) showing a state after the airbag has been inflated.

A seat 5 is placed on a floor panel 1, and an instrument panel 2 is disposed in front of the seat 5. The instrument panel 2 curves in a convex shape toward the interior of the vehicle so as to come close to the front of the seat cushion of the seat 5. A dash panel 3 is arranged to connect the lower end of the instrument panel 2 and the front end of the floor panel 1. The dash panel 3 stands substantially upward from the front end of the floor panel 1 so as to face the toes of occupant's legs.

An opening 2a is provided at the lower part of the instrument panel 2 and in the vicinity of a height facing the insteps or the ankles of the occupant's legs. An occupant's leg protection system 10 is placed on the back of the instrument panel 2 so as to face the opening 2a. The occupant's leg protection system 10 has a casing 12 whose front surface (adjacent to the occupant) is open and which serves as a retainer, an airbag 14 housed in the casing 12 in a folded condition, and an inflator 16 for inflating the airbag 14. The front open area of the casing 12 is arranged to face the opening 2a. The opening 2a is closed by a lid 18 mounted substantially flush with the instrument panel 2.

The airbag 14 deploys only forward of the ankles or the insteps of the occupant's legs. The inflator 16 according to the embodiment is column shaped and is arranged to pass through the airbag 14 along the width of the vehicle. The rear of the inflator 16 of the airbag 14 is joined to the casing 12 with a fastening (not shown).

The shape of the inflator 16 is not limited to the column and it may be shaped like a disk, etc.

When a vehicle including the occupant's leg protection system 10 with such an arrangement comes in a frontal crash, the inflator 16 is activated to emit gas to inflate the airbag 14. The airbag 14 push-opens the lid 18 and deploys forward of the ankles or the insteps of the occupant's legs, thereby preventing the forward movement thereof.

With the occupant's leg protection system 10, since the airbag 14 deploys only forward of the ankles or the insteps of the occupant's legs, the airbag 14 restrains the ankles or the insteps early, thus preventing them from hitting against the dash panel 3 and so on.

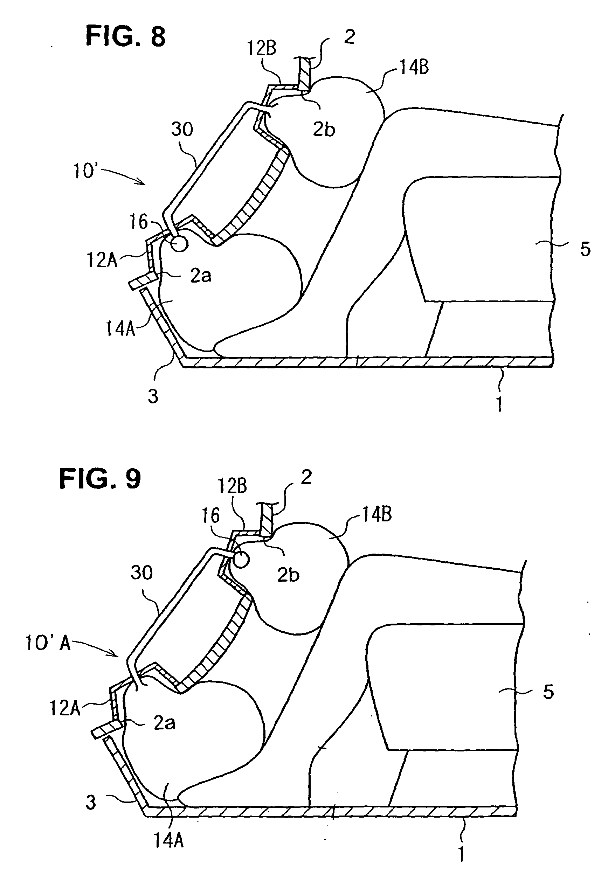

Fig. 8 is a longitudinal sectional view of an occupant's leg protection system according to another embodiment of the present invention, showing a state when an ankle bag and a knee bag have inflated.

According to the embodiment, an occupant's leg protection system 10' is equipped with an airbag including an ankle bag 14A that deploys only forward of the ankles or the insteps of the occupant's legs and a knee bag 14B that is separated from the ankle bag 14A and deploys only forward of the knees.

The instrument panel 2 has the opening 2a for passing the ankle bag through in the vicinity of a height facing the ankles or the insteps of the occupant's legs and an opening 2b for passing the knee bag through in the vicinity of a height facing the knees. An ankle bag casing 12A and a knee bag casing 12B are mounted on the back of the instrument panel 2 so as to face the openings 2a and 2b, respectively. The casings 12A and 12B are open on the front surface (adjacent to the occupant). The front open areas face the openings 2a and 2b, respectively. The openings 2a and 2b are each closed by a lid (not shown) that is mounted substantially flush with the instrument panel 2.

The ankle bag 14A and the knee bag 14B are housed in the ankle bag casing 12A and the knee bag casing 12B in folded conditions, respectively. The ankle bag 14A and the knee bag 14B are connected to the casings 12A and 12B with fastenings (not shown), respectively.

The column-shaped inflator 16 is arranged to pass through the ankle bag 14A along the width of the vehicle. According to the embodiment, the ankle bag 14A and the knee bag 14B communicate with each other through a duct 30. One end of the duct 20 is inserted in the ankle bag 14A through the wall of the ankle bag casing 12A and is joined to part of a gas generator (not shown) of the inflator 16. The other end is inserted in the knee bag 14B through the wall of the knee bag casing 12B.

In the occupant's leg protection system 10' with such an arrangement, when the inflator 16 is activated to emit gas, part of the gas from the inflator 16 flows directly into the ankle bag 14A and other part thereof is supplied into the knee bag 14B through the duct 30. The ankle bag 14A and the knee bag 14B are inflated by the gas from the inflator 16 to push-open the lid and inflate forward of the ankles or the insteps and forward of the knees of the occupant's legs, respectively.

Also in the occupant's leg protection system 10', the ankle bag 14A deploys only forward of the ankles or the insteps of the occupant's legs and the knee bag 14B deploys only forward of the knees. Therefore, the ankle bag 14A and the knee bag 14B restrain the ankles or the insteps and the knees of the occupant's legs early, respectively, thus preventing them from hitting against the dash panel 3 and the instrument panel 2.

The knee bag 14B restrains the knees to prevent the forward movement thereof, thereby sufficiently preventing also the forward movement of the thighs and the lumbar part.

With the occupant's leg protection system 10', the ankle bag 14A and the knee bag 14B receive two parts of the occupant's legs, the lower end (the ankles or the insteps) and the upper end (knees), thus preventing the forward movement of the vicinity of the shins therebetween even if they are not directly received by the airbag. Accordingly, the forward movement of the occupant's legs can be prevented by merely inflating the ankle bag 14A and the knee bag 14B only in a total of two areas of the ankles or the insteps and the knees, respectively. Omitting the reception of the sighs by the airbag allows the capacity of the entire airbag to be decreased; thus, the ankle bag 14A and the knee bag 14B can be inflated early even with a low-output inflator.

In the embodiment that employs an airbag formed of the ankle bag 14A and the knee bag 14B separate from the ankle bag 14A, the ankle bag 14A and the knee bag 14B can be arranged separately, thus offering a high degree of flexibility in arranging the bags 14A and 14B.

According to the embodiment, the ankle bag 14A and the knee bag 14B communicate with each other through the duct 30. Therefore, it is sufficient to provide one inflator for inflating the ankle bag 14A and the knee bag 14B.

According to the embodiment, the inflator 16 is arranged in the ankle bag 14A. The inflator 16, however, may be arranged in the knee bag 14B, as in an occupant's leg protection system 10'A of Fig. 9. Alternatively, it is also possible to provide an inflator mounting section 30a in the middle of the duct 30, to which the inflator 16 is mounted, as in an occupant's leg protection system 10'B. The inflator may be disposed in each of the ankle bag 14A and the knee bag 14B, which is not shown.

In the occupant's leg protection system 10'A of Fig. 9, the inflator 16 is arranged to pass through the knee bag 14B along the width of the vehicle. One end of the duct 30 is inserted in the knee bag 14B and joined to part of a gas generator (not shown) of the inflator 16 and the other end is inserted in the ankle bag 14A. Part of the gas from the inflator 16 flows directly into the knee bag 14B and other part thereof is supplied into ankle bag 14A through the duct 30.

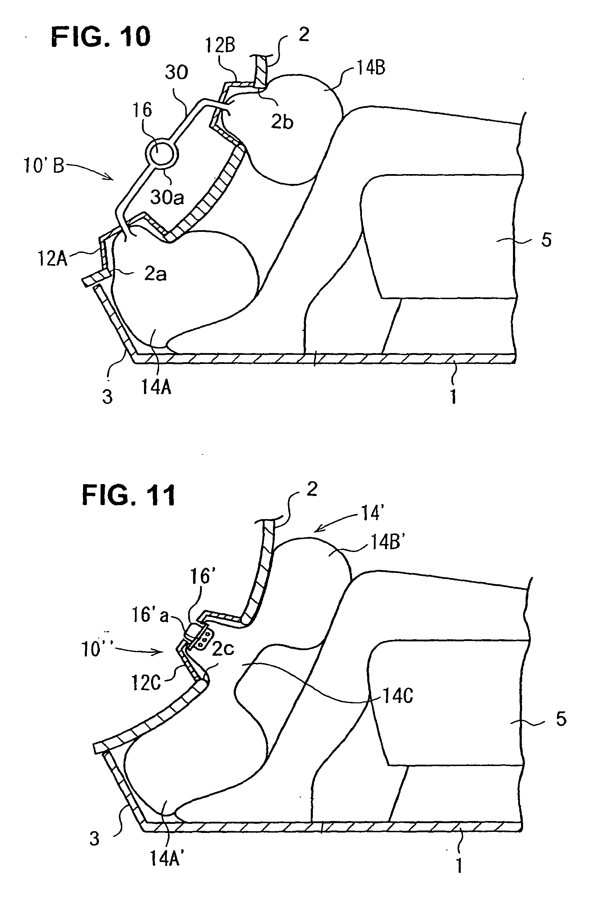

With the occupant's leg protection system 10'B of Fig. 10, the inflator 16 is mounted to an inflator mounting section 30a in the middle of a duct 30. Opposite ends of the duct 30 are inserted in the ankle bag 14A and the knee bag 14B, respectively. The gas from the inflator 16 is let in the duct 30 through the inflator mounting section 30a and is delivered into the ankle bag 14A and the knee bag 14B through the duct 30.

Other arrangements of the occupant's leg protection system 10'A and the occupant's leg protection system 10'B are the same as those of the occupant's leg protection system 10' of Fig. 8. Therefore, the same components are given the same reference numerals and a description thereof will be omitted.

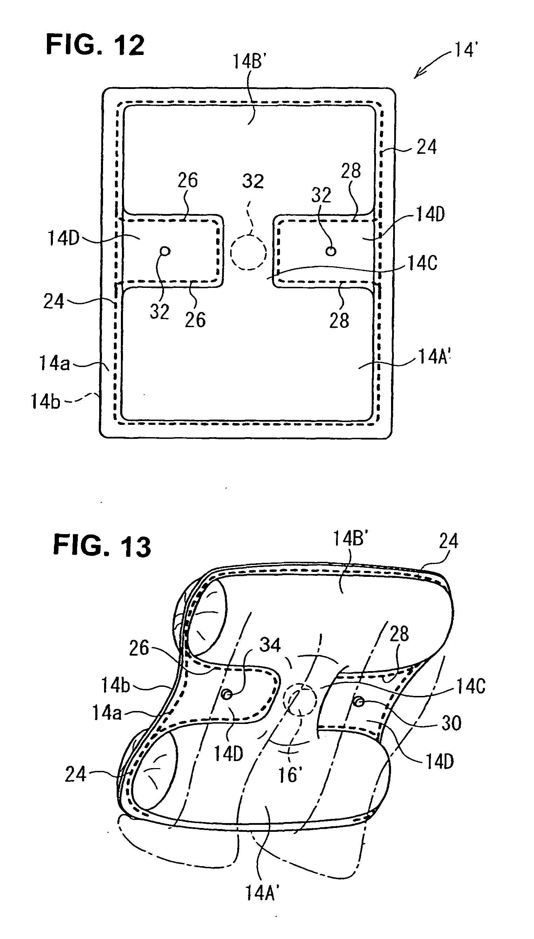

Fig. 11 is a longitudinal sectional view of an occupant's leg protection system according to a further embodiment; Fig. 12 is a front view of an airbag of the occupant's leg protection system; and Fig. 13 is a perspective view of the airbag. Figs. 11 and 13 show the state after the airbag has been inflated.

In this embodiment, the instrument panel 2 has an opening 2c for passing the airbag through in the middle between the height facing the ankles or the insteps of the occupant's legs and the height facing the knees. An occupant's leg protection system 10" is mounted on the back of the instrument panel 2 so as to face the opening 2c. The occupant's leg protection system 10" also includes a casing 12C whose front surface (adjacent to the occupant) is open, an airbag 14' housed in the casing 12C in a folded condition, and an inflator 16' for inflating the airbag 14'. The front open area of the casing 12C is arranged to face the opening 2c. The opening 2c is closed by a lid mounted substantially flush with the instrument panel 2.

The airbag 14' is shaped like a bag integrally including an ankle section 14A' that deploys only forward of the ankles or the insteps, a knee section 14B' that deploys only forward of the knees, and a duct 14C that communicates the ankle section 14A' and the knee section 14B' with each other.

The inflator 16' according to the embodiment is shaped like a disk, the end of which is inserted in the duct 4C through an inflator opening 32 (refer to Fig. 12) provided on the back of the duct 14C. A flange 16'a projects radially from the peripheral side surface of the end of the inflator 16'. The periphery of the opening 22 is airtightly sandwiched between the flange 16'a and the bottom of the casing 12C.

According to the embodiment, the airbag 14' is formed into a bag shape by superposing a substantially rectangular front panel 14a that forms the front surface of the airbag 14' and a rear panel 14b of substantially the same shape as that of the front panel 14a, which forms the rear surface, and joining the peripheries thereof together along a seam 24. The front panel 14a and the rear panel 14b are joined together along seams 26 and 28 that are recessed toward the center from the vertical middle of the left and right sides of the front panel 14a and the rear panel 14b, respectively, and the airbag 14' is thereby partitioned into the ankle section 14A', the knee section 14B', and the duct 14C.

Each of the seams 26 and 28 has a substantially U-shape outline, one side extending vertically and the other two sides extending laterally in parallel to the upper side and the lower side of the front panel 14a and the rear panel 14b, the vertically extending sides are opposed in the vicinity of the lateral middle between the front panel 14a and the rear panel 14b. The space between the sides serves as the duct 14C. Both ends of each of the seams 26 and 28 join the seam 24.

The method of joining the front panel 14a to the rear panel 14b may include various methods such as bonding and welding in addition to the stitching.

Noninflation areas 14D of the airbag 14', which are surrounded by the seams 26 and 28, are each provided with a hole 32 for letting a fastening 34 (refer to Fig. 13) such as a bolt through. The fastenings 34 are fastened to the casing 12C through the holes 32, so that the noninflation areas 14D of the airbag 14' are fastened to the casing 12C.

In the occupant's leg protection system 10" with such an arrangement, when the inflator 16' is activated to emit gas, part of the gas from the inflator 16' flows into the duct 14C and then flows into the ankle section 14A' and the knee section 14B' through the duct 14C. The ankle section 14A' and the knee section 14B' are inflated by the gas from the inflator 16' to push-open the lid and deploy forward of the ankles or the insteps and forward of the knees of the occupant's legs, respectively.

Also in the occupant's leg protection system 10", the ankle section 14A' deploys only forward of the ankles or the insteps of the occupant's legs and the knee section 14B' deploys only forward of the knees. Therefore, the ankle section 14A' and the knee section 14B' restrain the ankles or the insteps and knees of the occupant's legs early, respectively, thereby preventing them from hitting against the dash panel 3 and the instrument panel 2. The knee section 14B' restrains the knees, thereby sufficiently preventing also the forward movement of the thighs and the lumbar part.

Also with the occupant's leg protection system 10", the ankle section 14A' and the knee section 14B' receive two parts of the occupant's legs, the lower end (the ankles or the insteps) and the upper end (knees), thereby preventing the forward movement of the occupant's legs even if the vicinity of the shins therebetween is not directly received by the airbag. Accordingly, the capacity of the entire airbag 14" can be reduced by omitting the reception of the shins by the airbag.

Since the occupant's leg protection system 10" has the airbag 14' made up of a single bag, it is sufficient to provide one casing (retainer) 12C for housing the airbag 14', which facilitates the mounting of the occupant's leg protection system 10" to the vehicle body.

According to the embodiment, although the inflator 16' is arranged in the duct 14C, it may be arranged in the ankle section 14A'. In this case, the opening 2c for passing the airbag through is arranged at the lower part of the instrument panel 2 and in the vicinity of a height facing the ankles or insteps of the occupant's legs, and the casing 12C is arranged at the height facing the opening 2c, which are not shown. The back of the ankle section 14A' of the airbag 14' is connected to the casing 12C.

In the occupant's leg protection system with such an arrangement, the ankle section 14A' first deploys forward of the ankles or the insteps of the occupant's legs and the airbag 14' then deploys upward to inflate the knee section 14B' forward of the knees by the gas from the inflator 16'. Thus, the ankle section 14A' restrains the ankles or the insteps of the occupant's legs early, thereby preventing the forward movement thereof. The knee section 14B' restrains the knees, thereby sufficiently preventing the forward movement of the knees, the thighs, and the lumbar part.

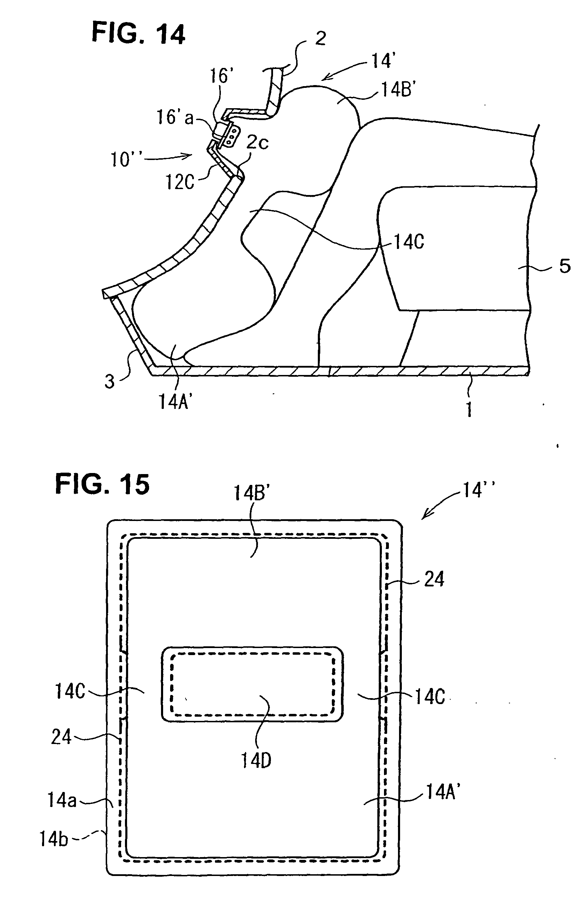

Referring to Figs. 11 to 13, the inflator 16' is arranged in the duct 14C of the airbag 14'. It may be arranged in the knee section 14B', as shown in Fig. 14. Other arrangements of Fig. 14 are the same as those of Fig. 11 and the same numerals indicate the same components.

Although the duct 14C is arranged in the lateral center of the airbag 14' in Figs. 11 to 13, the duct 14C may be arranged along each of the left and right sides of the airbag 14", as in Fig. 15. Other arrangements of Fig. 15 are the same as those of Fig. 12 and the same numerals indicate the same components.

It is to be understood that the above-described embodiments are only examples of the present invention and the invention is not limited to the above embodiments.

As described above, the occupant's leg protection system according to the invention is capable of retraining the ankles or the insteps early.

According to the invention, the system can also be constructed to sufficiently prevent the forward movement of the knees, the thighs, and the lumbar part of the occupant.

## Claims

1. An occupant's leg protection system (10; 10'; 10'A; 10'B; 10") comprising an airbag (14; 14'; 14"; 14"') that deploys forward of the legs of an occupant seated in a vehicle seat (5), wherein the airbag (14; 14'; 14"; 14"') deploys substantially only in a total of two areas forward of the ankles or the insteps and forward of the knees of the occupant's legs.

2. The occupant's leg protection system (10; 10') according to claim 1, wherein the airbag (14; 14'; 14") deploys forward of the ankles or the insteps and then deploys forward of the knees.

3. The occupant's leg protection system (10; 10') according to claim 1 or claim 2, wherein the airbag (14; 14'; 14") first deploys forward of the ankles or the insteps of the occupant's legs and then deploys upward along the legs.

4. The occupant's leg protection system (10'; 10'A; 10'B) according to claim 1 or claim 2, wherein the airbag (14) comprises an ankle bag (14A) that deploys only forward of the ankles or the insteps and a knee bag (14B) that is separated from the ankle bag and deploys only forward of the knees.

5. The occupant's leg protection system (10'; 10'A; 10'B) according to claim 4, wherein the ankle bag (14A) and the knee bag (14B) communicate through a duct (30).

6. The occupant's leg protection system (10'; 10'A; 10'B) according to claim 5, wherein the ankle bag (14A) and the knee bag (14B) share one inflator (16).

7. The occupant's leg protection system (10; 10'; 10") according to any one of claims 1-3, wherein the airbag (14; 14'; 14") is shaped like a bag integrally including an ankle section (14A; 14A') that deploys only forward of the ankles or the insteps and a knee section (14B; 14B') that deploys only forward of the knees.

8. The occupant's leg protection system (10; 10';10") according to claim 7, wherein the ankle section (14A; 14A') forms a lower chamber of the airbag (14; 14'; 14") and the knee section (14B; 14B') forms an upper chamber of the airbag (14; 14'; 14").

9. The occupant's leg protection system according to claim 7 or claim 8, wherein the airbag (14; 14'; 14") comprises a duct (14C; 14C') through which the ankle section (14A; 14A') and the knee section (14B; 14B') communicate.

## Patentansprüche

1. Insassenbeinschutzsystem (10; 10'; 10'A; 10'B; 10") umfassend einen Airbag (14; 14'; 14"; 14"'), welcher sich vor den Beinen eines Insassen entfaltet, der in einem Fahrzeugsitz (5) sitzt, wobei sich der Airbag (14; 14'; 14"; 14"') im Wesentlichen nur in insgesamt zwei Bereichen vor den Fußgelenken oder den Spannen und vor den Knien der Beine des Insassen entfaltet.

2. Insassenbeinschutzsystem (10; 10') nach Anspruch 1, wobei sich der Airbag (14; 14'; 14") vor den Fußgelenken oder den Spannen und dann vor den Knien entfaltet.

3. Insassenbeinschutzsystem (10; 10') nach Anspruch 1 oder Anspruch 2, wobei sich der Airbag (14; 14'; 14") zuerst vor den Fußgelenken oder den Spannen der Beine des Insassen entfaltet und sich dann entlang der Beine nach oben entfaltet.

4. Insassenbeinschutzsystem (10'; 10'A; 10'B) nach Anspruch 1 oder Anspruch 2, wobei der Airbag (14) einen Fußgelenkairbag (14A), welcher sich nur vor den Fußgelenken oder den Spannen entfaltet, und einen Knieairbag (14B), welcher von dem Fußgelenkairbag getrennt ist und sich nur vor den Knien entfaltet, umfasst.

5. Insassenbeinschutzsystem (10'; 10'A; 10'B) nach Anspruch 4, wobei der Fußgelenkairbag (14A) und der Knieairbag (14B) durch einen Kanal (30) kommunizieren.

6. Insassenbeinschutzsystem (10'; 10'A; 10'B) nach Anspruch 5, wobei sich der Fußgelenkairbag (14A) und der Knieairbag (14B) eine Aufblasvorrichtung (16) teilen.

7. Insassenbeinschutzsystem (10; 10'; 10") nach einem der Ansprüche 1-3, wobei der Airbag (14; 14'; 14") wie ein Airbag geformt ist, welcher ganzheitlich ein Fußgelenkabschnitt (14A; 14A'), welcher sich nur vor den Fußgelenken oder den Spannen entfaltet, und einen Knieabschnitt (14B; 14B'), welcher sich nur vor den Knien entfaltet, aufweist.

8. Insassenbeinschutzsystem (10; 10'; 10") nach Anspruch 7, wobei der Fußgelenkabschnitt (14A; 14A') eine untere Kammer des Airbags (14; 14'; 14") ausbildet und der Knieabschnitt (14B; 14B') eine obere Kammer des Airbags (14; 14'; 14") ausbildet.

9. Insassenbeinschutzsystem nach Anspruch 7 oder Anspruch 8, wobei der Airbag (14; 14'; 14") einen Kanal (14C; 14C') umfasst, durch welchen der Fußgelenkabschnitt (14A; 14A') und der Knieabschnitt (14B; 14B') kommunizieren.

## Revendications

1. Système de protection de jambe d'occupant (10 ; 10' ; 10'A ; 10'B ; 10") comprenant un coussin gonflable on airbag (14 ; 14' ; 14" ; 14"') qui se déploie en avant des jambes d'un occupant assis sur un siège d'un véhicule (5), dans lequel le coussin gonflable (14 ; 14' ; 14" ; 14"') se déploie sensiblement seulement dans deux zones au total, en avant des chevilles ou des cous-de-pied, et en avant des genoux des jambes de l'occupant.

2. Système de protection de jambe d'occupant (10 ; 10') selon la revendication 1, dans lequel le coussin gonflable (14 ; 14' ; 14") se déploie en avant des chevilles ou des cous-de-pied, et se déploie ensuite en avant des genoux.

3. Système de protection de jambe d'occupant(10 ; 10') selon l'une quelconque des revendications 1 ou 2, dans lequel le coussin gonflable (14 ; 14' ; 14") se déploie d'abord en avant des chevilles ou des cous-de-pied des jambes de l'occupant, et se déploie ensuite vers le haut le long des jambes.

4. Système de protection de jambe de l'occupant (10 ; 10'A ; 10'B) selon l'une quelconque des revendications 1 ou 2, dans lequel le coussin gonflable (14) comprend un coussin gonflable pour chevilles (14A) qui se déploie seulement en avant des chevilles ou des cous-de-pied, et un coussin gonflable pour genoux (14B) qui est distinct du coussin gonflable pour chevilles, et qui se déploie seulement en avant des genoux.

5. Système de protection de jambe d'occupant (10 ; 10'A ; 10'B) selon la revendication 4, dans lequel le coussin gonflable pour chevilles (14A) et le coussin gonflable pour genoux (14B) communiquent par l'intermédiaire d'un conduit (30).

6. Système de protection de jambe d'occupant (10 ; 10'A ; 10'B) selon la revendication 5, dans lequel le coussin gonflable pour chevilles (14A) et le coussin gonflable pour genoux (14B) partagent un même dispositif de gonflage (16).

7. Système de protection de jambe d'occupant (10 ; 10' ; 10") selon l'une quelconque des revendications 1 à 3, dans lequel le coussin gonflable (14 ; 14' ; 14") prend la forme d'un coussin comprenant, d'une pièce, une partie (14A ; 14A') pour les chevilles qui se déploie seulement en avant des chevilles ou des cous-de-pied, et une partie genoux (14B ; 14B') pour les genoux qui se déploie seulement en avant des genoux.

8. Système de protection de jambe d'occupant(10 ; 10' ; 10") selon la revendication 7, dans lequel la partie (14A ; 14A') pour les chevilles forme une chambré inférieure du coussin gonflable (14 ; 14' ; 14"), et la partie (14B ; 14B') pour les genoux forme une chambre supérieure du coussin gonflable (14 ; 14' ; 14").

9. Système de protection de jambe d'occupant selon l'une quelconque des revendications 7 ou 8, dans lequel le coussin gonflable (14 ; 14' ; 14") comprend un conduit (14C ; 14C') à travers lequel communiquent la partie (14A ; 14A') pour les chevilles et la partie (14B ; 14B') pour les genoux.
